**Europäisches Patentamt**

**European Patent Office**

**Office européen des brevets**

(19)

(11) Veröffentlichungsnummer: **0 170 661**
**B1**

(12) EUROPÄISCHE PATENTSCHRIFT

(45) Veröffentlichungstag der Patentschrift:
**05.10.88**

(51) Int. Cl.⁴: **B 65 G 67/60**

(21) Anmeldenummer: **85900456.6**

(22) Anmeldetag: **18.12.84**

(86) Internationale Anmeldenummer:
**PCT/EP 84/00409**

(87) Internationale Veröffentlichungsnummer:
**WO 85/03279 (01.08.85 Gazette 85/17)**

(54) **VERFAHREN UND VORRICHTUNG ZUM ENTLADEN VON SCHÜTTGUT AUS EINEM GROSSEN BEHÄLTER.**

(30) Priorität: **26.01.84 DE 3402649**

(43) Veröffentlichungstag der Anmeldung:
**12.02.86 Patentblatt 86/7**

(45) Bekanntmachung des Hinweises auf die Patenterteilung:
**05.10.88 Patentblatt 88/40**

(84) Benannte Vertragsstaaten:
**AT BE CH DE FR GB LI LU NL SE**

(56) Entgegenhaltungen:
**AU - A - 481 905**
**DE - A - 2 716 014**
**FR - A - 1 092 849**
**FR - A - 1 178 382**
**FR - A - 2 398 004**
**US - A - 4 336 877**

(73) Patentinhaber: **Conrad Scholtz AG, Am Stadtrand 55/50,
D-2000 Hamburg 70 (DE)**

(72) Erfinder: **NOLTE, Günther, Illbrucksweg 12,
D-4130 Moers (DE)**

(74) Vertreter: **Lieck, Hans-Peter, Dipl.-Ing., Patentanwalt
Lieck Maximiliansplatz 10, D-8000 München 2 (DE)**

## Beschreibung

Die Erfindung betrifft ein Verfahren und eine Vorrichtung zum Entladen von Schüttgut aus einem grossen Behälter, insbesondere aus einem Schiff, mittels eines Fördergurtes aus Gummi oder dergleichen nach dem Oberbegriff des Anspruches 1 bzw. 2.

Bei bekannten derartigen Verfahren und Vorrichtungen, wie sie z.B. aus der DE-A 31 02 731 hervorgehen, ist im Bereich der unteren End-Umlenkung des Fördergurtes bzw. am unteren Ende des Fördergerüstes ein besonderes Aufnahmegerät für das Schüttgut, z.B. ein Schaufelrad, vorgesehen, welches in das Schüttgut eintaucht und das aufgenommene Schüttgut auf den in üblicher Weise zwischen zwei Endtrommeln unter Vorspannung umlaufenden Fördergurt übergibt. Das Aufnahmegerät und die dazu notwendige Übergabeeinrichtung stellen einen grossen baulichen Aufwand dar.

Es sind auch schon Schüttgut-Entlade-Vorrichtungen ohne besonderes Aufnahmegerät bekannt, die jedoch nicht mit einem Gummi-Fördergurt arbeiten. So ist in der DE-A 27 16 014 eine Vorrichtung zum Entladen von Schüttgut insbesondere aus Schiffen beschrieben, die ein umlaufendes Förderbecherwerk aus Eisen aufweist. Das Förderbecherwerk umfasst eine tragende Kette, an der einzelne, selbstschöpfende Förderbecher befestigt sind. Das Förderbecherwerk läuft an einem senkrechten Hauptträger nach unten und nach oben. Am unteren Ende des Hauptträgers ist ein Schwenkarm angelenkt, der durch einen Steuerlenker auf unterschiedliche Schwenkstellungen fest einstellbar ist und an seinem freien Ende ein Umlenkrad für die Kette trägt. Zwischen dem unteren Ende des Hauptträgers und dem Umlenkrad läuft das Förderbecherwerk mit einem gewissen, die Verstellung des Schwenkarmes ermöglichenden Durchhang. Das Schüttgut wird vom selbstschöpfenden Förderbecherwerk im Bereich unterhalb der unteren, jeweils fest positionierten Umlenktrommel erfasst und ohne Übergabe in den Förderbechern nach oben transportiert. Anlagen mit eisernen Förderbecherwerken bauen jedoch sehr schwer, haben trotzdem nur eine begrenzte Förderkapazität, erzeugen im Betrieb sehr viel Lärm und unterliegen einem hohen Verschleiss.

Der Erfindung liegt die Aufgabe zugrunde, ein gattungsgemässes Verfahren und eine entsprechende Vorrichtung zum Entladen von Schüttgut anzugeben, mit denen eine deutliche Verringerung des baulichen Aufwandes der Entlade-Vorrichtung erzielbar ist.

Diese Aufgabe wird erfindungsgemäss mit dem im Anspruch 1 gekennzeichneten Verfahren und der im Anspruch 2 gekennzeichneten Vorrichtung gelöst, wobei vorteilhafte Ausgestaltungen der Vorrichtung aus den anschliessenden Unteransprüchen hervorgehen.

Bei dem erfindungsgemässen Verfahren und der entsprechenden Vorrichtung dient der Fördergurt selbst als Aufnahmegerät. Der Fördergurt bzw. das Fördergerüst mit dem Fördergurt werden so weit abgesenkt, dass der Fördergurt im Bereich der freien Schleife in das Schüttgut eintaucht und es mit seinen in Laufrichtung abgewinkelten, schaufelförmigen Mitnehmerleisten aufnimmt, um es ohne weitere Übergabe im Fördertrum nach oben aus dem Behälter herauszufördern. Durch den Fortfall eines besonderen Aufnahmegerätes und einer zugehörigen Übergabeeinrichtung wird eine grosse bauliche Vereinfachung erzielt, die um so erheblicher ist, als sie nicht durch einen besonderen Aufwand für die Führung des Fördergurtes im Bereich seiner unteren End-Umlenkung erkauft werden muss. Vielmehr läuft der Fördergurt dort in höchst einfacher Weise in einer frei gebildeten Schleife. Es hat sich überraschenderweise gezeigt, dass das Laufenlassen des Fördergurtes in dieser freien Schleife und damit notwendigerweise auch ohne besondere Vorspannung das Betriebsverhalten des Fördergurtes, insbesondere seinen Geradlauf, in keiner Weise nachteilig beeinflusst. Es ist lediglich dafür zu sorgen, dass die vom Fördergurt umschlungene Antriebstrommel für denselben so ausreichend hoch gelegen ist, dass sich durch das Eigengewicht des Fördergurtes unterhalb der Antriebstrommel ein für den Antrieb des Fördergurtes ausreichend grosser Reibschluss an der Antriebstrommel ergibt.

Abgesehen von der grossen baulichen Vereinfachung hat das Laufenlassen des Fördergurtes in der freien Schleife auch für die Arbeitsweise beim Aufnehmen des Schüttgutes grosse Vorteile: Der Fördergurt kann sich ohne äusseren Zwang und unter quasi selbsttätiger Anpassung an die jeweilige Böschung des Schüttgutes in dieses einarbeiten. Etwaigen Hindernissen im Schüttgut, z.B. besonders schweren Brocken oder hineinragenden Bauteilen des Behälters, kann der Fördergurt selbsttätig ausweichen. So ist eine grosse Schonung des selbstschöpfenden Fördergurtes, aber auch des Schüttgutes selber gewährleistet. Da die Schleife durch den Gegendruck des Schüttgutes so verformt wird, dass das Rücktrum im Bereich der Schleife die Kontur eines in Wirklichkeit nicht vorhandenen horizontalen Auslegers annimmt, läuft der Fördergurt am unteren Ende der Schleife über einen längeren Abschnitt in etwa linear und seine abgewinkelten Mitnehmerleisten können sich in Laufrichtung fortschreitend tiefer in das Schüttgut eingraben. Dadurch kommt ein sehr hoher Grad der Füllung des Fördergurtes mit Schüttgut zustande und der Fördergurt läuft besonders ruhig und schwingungsfrei. Die Eigenschaft des Fördergurtes, sich im Bereich der freien Schleife an den Untergrund «anzuschmiegen», hat weiterhin eine besonders saubere Entleerung des Behälters bis auf den Boden zur Folge, auf dem der Fördergurt mit seinen Mitnehmerleisten das Schüttgut quasi aufkehrt, und zwar auch dort, wo der Boden gekrümmt oder uneben ist. Die Folge ist eine mit bisherigen Aufnahmemitteln nicht erreichte Vollständigkeit der Entleerung des Behälters auch in Nischen und entfernten Winkeln.

Die freilaufende Trommel im Inneren der Schleife hat auf die eigentliche Bildung der Schleife keinen Einfluss und sie erteilt insbesondere dem Fördergurt keine Zug-Vorspannung. Sie hat lediglich die Aufgabe, die Schleife im Betrieb zu stabilisieren und dafür zu sorgen, dass der Fördergurt, in Laufrichtung betrachtet, nicht vorzeitig aus dem Schüttgut abhebt und nach oben wegläuft. Sie kann daher sehr leicht gebaut sein. Die Begrenzungs-Trommel wird vorzugsweise so positioniert, dass das Fördertrum des Fördergurtes von der Begrenzungs-Trommel weg einen in etwa geradlinigen Verlauf hat. In vertikaler Richtung ist die Begrenzungs-Trommel begrenzt verlagerbar, damit sie sich dem jeweiligen Zustand, den die Schleife beim Aufnahme-Vorgang unterschiedlich annimmt, stets anpassen kann. Eine bevorzugte und baulich besonders einfache Aufhängung der Begrenzungs-Trommel am Fördergerüst derart, dass sich die geschilderten Wirkungen ergeben und keine starre Vorgabe der Schleifen-Form eintritt, geht aus Anspruch 7 hervor.

Die DE-A 27 16 014 konnte dem Fachmann keine Anregung zur Schaffung des Erfindungsgegenstandes liefern. Grundsätzlich gehorchen schwere Förderbecherwerke aus Eisen anderen Gesetzen und unterliegen im Betrieb anderen Bedingungen, als dies Fördergurte aus Gummi oder gummiähnlichen Werkstoffen tun. Insbesondere aber war die Fachwelt bisher der Überzeugung, dass ein Gummi-Fördergurt nur mit einer besonderen, von einer Spanntrommel erteilten Vorspannung betrieben werden könne und ohne solche Vorspannung schieflaufen und von den flachen Umlenk- und Endtrommeln schliesslich seitlich ablaufen werde. Das Schieflauf-Problem lag bei Ketten-Förderbecherwerken erkennbar von vornherein nicht vor, weil die in allen Richtungen gelenkige Kette an den Umlenkrädern auch in seitlicher Richtung zwangsgeführt ist. Weiterhin war es für den Fachmann nicht ohne weiteres vorhersehbar, das Selbstschöpfen des Schüttgutes, das bei einem Ketten-Förderbecherwerk ohne weiteres möglich ist, weil die Becher aus Eisen bestehen und formstabil sind, mit einem mit nachgiebigen Mitnehmerleisten besetzten Fördergurt aus Gummi oder dergleichen bewirken zu können. Schliesslich geht die Erfindung hinsichtlich der Bildung der Fördergurt-Schleife am unteren Ende einen gänzlich eigenständigen Weg. Gemäss der DE-A 27 16 014 wird zwar das Förderbecherwerk vor dem unteren Umlenkrad mit einem gewissen Durchhang geführt. Trotzdem bestimmt sich die Gestalt der Bahn des Förderbecherwerkes allein nach der jeweils fest vorgegebenen Position des unteren Umlenkrades und ist unabhängig von den Reaktionskräften, die beim Aufsetzen des Förderbecherwerkes auf das Schüttgut entstehen. Im Gegensatz hierzu sind es diese Reaktionskräfte, die beim Erfindungsgegenstand die Form der Schleife im Zusammenwirken mit der Elastizität des Gummi-Fördergurtes wesentlich bestimmen und ihr die auslegerförmige Gestalt erteilen. Analoges gilt für die Begrenzungs-Trommel im Inneren der Fördergurt-Schleife im Vergleich zu dem unteren Umlenkrad der bekannten Vorrichtung insofern, als sich die Begrenzungs-Trommel in ihrer vertikalen Position ebenfalls nach den Reaktionskräften beim Aufsetzen richtet, also sich mit dieser Position der jeweiligen Form der Schleife anpasst, während bei der bekannten Vorrichtung das Umlenkrad umgekehrt die Form der Bahn des Förderbecherwerkes fest vorgibt.

Der beim Erfindungsgegenstand verwendete Fördergurt ist vorzugsweise gemäss Anspruch 3 mit sogenannten Wellenkanten besetzt, wobei dann die Mitnehmerleisten gemäss Anspruch 4 höher, z.B. ca. 20%, als die Wellenkanten sein sollen, damit die Wellenkanten den Schöpfvorgang nicht beeinträchtigen. Die Wellenkanten bilden zusammen mit den abgewinkelten Mitnehmerleisten in an sich bekannter Weise (DE-A 31 02 731) auf der Tragseite des Fördergurtes einzelne Förderkästen, in denen das Schüttgut auch in senkrechter Richtung ohne Verwendung einer zusätzlichen äusseren Abdeckung nach oben gefördert werden kann. Ausserdem können die seitlichen Wellenkanten zur Erhöhung des Füllgrades des Fördergurtes beim Aufnehmen des Schüttgutes insofern beitragen, als sie gewährleisten, dass einmal von den abgewinkelten Mitnehmerleisten erfasstes Schüttgut nicht wieder zur Seite abfliessen kann. Weist der Fördergurt keine Wellenkanten auf, wird man für das Fördertrum eine Abdeckung vorsehen, um zu verhindern, dass das Schüttgut von den Mitnehmerleisten seitlich herabfällt.

In der einfachsten Konfiguration der erfindungsgemässen Vorrichtung ist lediglich eine Antriebstrommel am oberen Ende des Fördergerüstes vorhanden, von der der Fördergurt quasi herabhängt, wobei der untere Bereich des Fördergurtes die Schleife darstellt. In der Praxis kann das Fördergerüst eine beträchtliche Höhe haben. In diesem Falle ist es zweckmässig, den Fördergurt im Fördergerüst gemäss Anspruch 5 mindestens am unteren Ende des Fördergerüstes zusätzlich zu führen. Hierdurch sind etwaige, durch den Schöpfvorgang erzeugte Eigenbewegungen des Fördergurtes auf den Bereich der Schleife begrenzt, und im Fördergerüst haben beide Fördergurt-Trume eine definierte Bahn, so dass ungewollte Berührungen zwischen Fördergurt und Fördergerüst verhindert sind. Wie schon gesagt, muss die Antriebstrommel nicht unmittelbar am oberen Ende des Fördergerüstes angeordnet sein. Vielmehr wird man den Fördergurt regelmässig am oberen Ende des Fördergerüstes über eine Umlenkeinrichtung in eine horizontale oder leicht geneigte Förderstrecke leiten, um entweder eine geeignete Abwurfmöglichkeit für das Schüttgut zu schaffen oder dies mit dem gleichen Fördergurt über eine längere Strecke in seitlicher Richtung weiter zu transportieren. Die Antriebstrommel ist dann am Ende des horizontalen Astes der Förderstrecke angeordnet.

Eine geeignete Bemessung für die Grösse der eigentlichen Schleife geht aus Anspruch 6 hervor.

Um das Einarbeiten der Mitnehmerleisten des Fördergurtes in das Schüttgut zu erleichtern, können die Mitnehmerleisten gemäss Anspruch 8 eine spitz zulaufende Oberkante haben. Weiterhin können mindestens einige der Mitnehmerleisten gemäss Anspruch 9 mit Zinken zur Auflockerung des Schüttgutes versehen sein. Bei dieser Ausgestaltung verzichtet man allerdings auf den Vorteil, dass der Behälter von den Gummi-Mitnehmerleisten bis zum Boden sauber «aufgekehrt» wird.

Im folgenden ist die Erfindung mit weiteren vorteilhaften Einzelheiten anhand zweier schematisch dargestellter Ausführungsbeispiele näher erläutert. Es zeigen:

Figur 1: Eine Vorrichtung zum Entladen von Schüttgut aus einem Schiff in schematisierter, teilweise weggebrochener Seitenansicht.

Figur 2: Einen Schnitt nach der Linie II-II in Figur 1.

Figur 3: Den unteren Teil einer anderen, gegenüber Figur 1 abgewandelten Vorrichtung zum Entladen von Schüttgut in einer Figur 1 entsprechenden Ansicht.

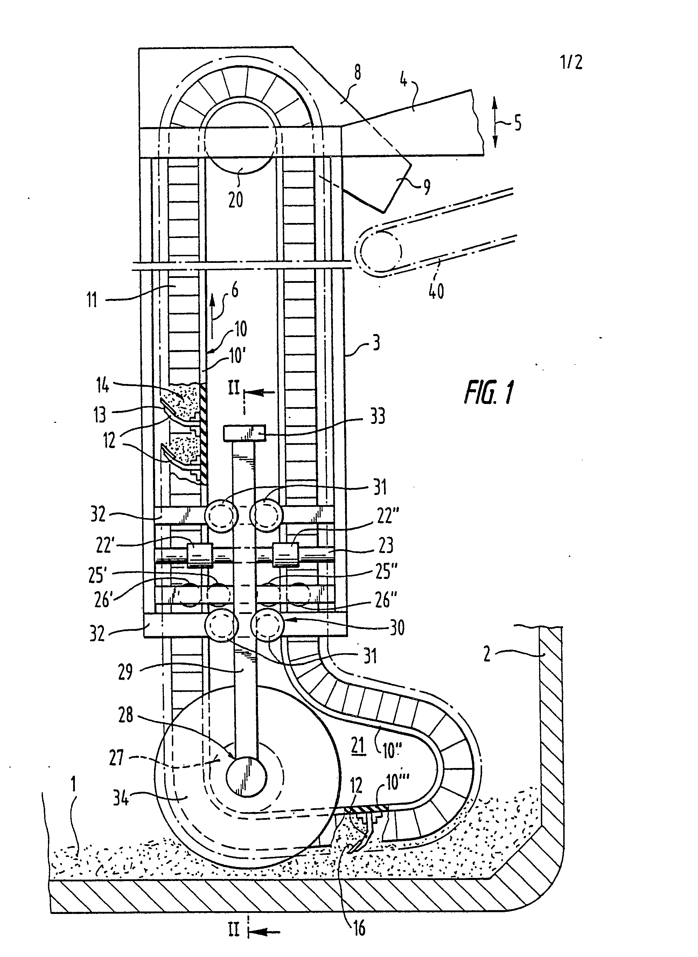

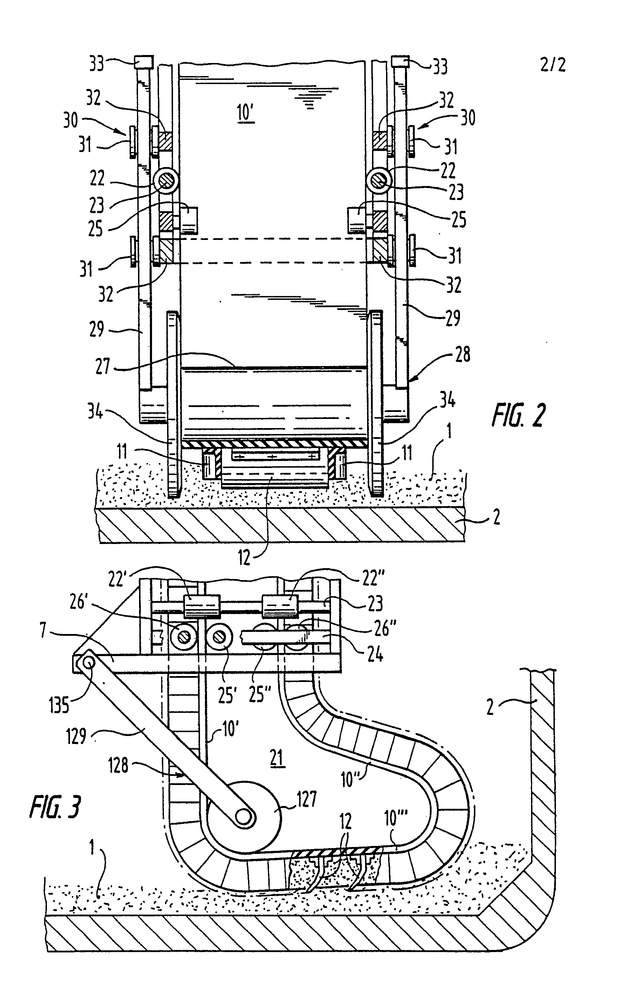

Die Vorrichtung gemäss Figur 1 und 2 dient zum Entladen von Schüttgut 1 aus einem Schiff 2. Die Vorrichtung umfasst ein senkrechtes Fördergerüst 3, das über einen seitlichen Tragarm 4 am oberen Ende in nicht näher dargestellter, jedoch an sich bekannter Weise an einer landseitigen Krananlage aufgehängt ist. Mittels der Krananlage kann das Fördergerüst 3 in der durch den Doppelpfeil 5 angedeuteten Weise in vertikaler Richtung stufenlos angehoben und abgesenkt werden. Ausserdem lässt sich das Fördergerüst in der bei Schiffsentladevorrichtungen üblichen Weise in horizontaler Richtung verlagern, um beim Entladen alle Punkte des Schiffsinneren erreichen zu können.

Im Fördergerüst 3 läuft ein endloser Fördergurt 10 aus Gummi, der auf seiner Tragseite mit zwei seitlichen, durchgehenden gewellten Randleisten, sogenannten Wellenkanten 11 besetzt ist, die ebenfalls aus Gummi gefertigt sind. Die Wellenkanten 11 sind jeweils in einem Abstand von der benachbarten Längskante des Fördergurtes 10 derart angeordnet, dass zwei freie, seitlich über die Wellenkanten 11 überstehende Randzonen des Fördergurtes 10 vorhanden sind. Ausserdem ist der Fördergurt auf der Tragseite zwischen den Wellenkanten mit zu diesen quer ausgerichteten, in Fördergurt-Längsrichtung gleichmässig voneinander beabstandeten Mitnehmerleisten 12 aus Gummi besetzt. Die Wellenkanten 11 zusammen mit den Mitnehmerleisten 12 umgrenzen auf dem Fördergurt 10 einzelne, kontinuierlich aufeinander folgende Förderkästen 14 zur Aufnahme des Schüttgutes 1. Die Mitnehmerleisten 12 haben einen abgewinkelten, schaufelförmigen Querschnitt, wobei die Abwinkelung in die durch den Pfeil 6 angezeigte Laufrichtung des Fördergurtes 10 weist. Die Mitnehmerleisten 12 sind, gemessen senkrecht zur Fördergurt-Ebene, ca. 20% höher als die Wellenkanten 11. Die Oberkanten 13 der Mitnehmerleisten sind spitz zulaufend ausgebildet. An jeder Mitnehmerleiste können mehrere, über die Breite verteilt angeordnete Zinken 16 aus Metall befestigt sein, die vom Fördergurt 10 weg über die Oberkante 13 ein Stück hinausstehen.

Der endlose Fördergurt 10 läuft mit der Tragseite nach aussen über eine Antriebstrommel 20, die im Fördergerüst 3 an dessem oberen Ende gelagert ist. Die beiden Trume des Fördergurtes 10 beiderseits der Antriebstrommel 20, nämlich das der Antriebstrommel 20 nach oben zulaufende Fördertrum 10' und das von der Antriebstrommel 20 nach unten weglaufende Rücktrum 10'', hängen von der Antriebstrommel frei, d.h. lediglich unter der Last ihres Eigengewichtes herab. Beide Trume 10' und 10'' erstrecken sich über die ganze Länge des Fördergerüstes und über dessen unteres Ende nach unten hinaus, so dass die zweite, untere End-Umlenkung des Fördergurtes 10 unterhalb des Fördergerüstes 3 stattfindet. Hierbei läuft der Fördergurt 10 unterhalb des Fördergerüstes 3 frei in einer lediglich unter dem Einfluss des Eigengewichtes des Fördergurtes, ohne Anwendung äusserer Spannmittel gebildeten Schleife 21. Jedem Trum 10' und 10'' sind am unteren Ende des Fördergerüstes 3 angebrachte Führungsrollen zugeordnet, welche die beiden Trume oberhalb der Schleife 21 jeweils in einer bestimmten Ebene und in einer bestimmten seitlichen Ausrichtung halten. Im einzelnen sind insgesamt vier, an den Kanten der beiden Trume angreifende Führungsrollen 22' und 22'' vorgesehen, die auf zwei quer zur Fördergurt-Ebene in horizontaler Richtung sich erstreckenden Achsen 23 gelagert sind und hierbei eine Position haben, dass die Fördergurt-Trume von den Führungsrollen 22 seitlich in Ausrichtung auf die Antriebstrommel 20 gehalten werden. Unterhalb der Führungsrollen 22 sind an zwei zu den Achsen 23 parallelen Streben 24 des Fördergerüstes 3 weitere Führungsrollen 25 und 26 mit zur Drehachse der Antriebstrommel 20 parallelen Drehachsen gelagert. Die Führungsrollen 25 gehen über die Breite des Fördergurtes durch und liegen an der Laufseite desselben an. Die Führungsrollen 26 sind als Stummelrollen ausgebildet und liegen gegenüber den Führungsrollen 25 an der Tragseite, und zwar im Bereich der schmalen Randzonen des Fördergurtes ausserhalb der Wellenkanten 11, an. Die Führungsrollen 25 und 26 sind so angeordnet, dass die beiden Trume 10' und 10'' oberhalb der Führungsrollen bis zur Antriebstrommel 20 genau parallel zum Fördergerüst 3 laufen.

Innerhalb der Schleife 21 befindet sich eine frei laufende Begrenzungs-Trommel 27, die unter ihrem Gewicht an der Laufseite des Fördergurtes 10 anliegt. Die Begrenzungs-Trommel 27 ist am unteren Ende eines Bügels 28 gelagert, der mit zwei Schenkelarmen 29, die beiderseits des Fördergurtes 10 aus der Schleife 21 nach oben herausreichen, am Fördergerüst 3 in Richtung der Bahn der Fördergurt-Trume 10' und 10'' verschiebbar gehalten ist. Zu diesem Zweck sind aussen am Fördergerüst zu beiden Seiten des Fördergurtes 10, vgl. auch Figur 2, Rollenführungen 30 für die Schenkelarme 29 vorgesehen. Jede Rollenführung 30 besteht aus zwei, mit Abstand übereinander angeordneten Kranzrollen-Paaren 31, deren Kranzrollen achsparalell zu den Führungsrollen 25 und 26 an Streben 32 des Fördergerüstes drehbar gelagert sind. Mittels der zwischen den Kranzrollen-Paaren 30 aufgenommenen Schenkelarme 29 wird die Begrenzungs-Trommel 27 in einer zu den Fördergurt-Trumen 10' und 10" parallelen Ebene gehalten, in der sie sich jedoch nach oben und unten frei verlagern kann, wobei Anschlagstücke 33 am oberen Ende der Schenkelarme ein Herausgleiten aus den Führungen 30 nach unten verhindern. Die seitliche Lage der Begrenzungs-Trommel 27 ist so gewählt, dass das Fördertrum 10' von der Begrenzungs-Trommel 27 auf einer Bahn nach oben läuft, welche die geradlinige Verlängerung der Bahn des Fördertrums innerhalb des Fördergerüstes 3 ist.

Die Begrenzungs-Trommel 27 besitzt zwei seitliche Flansche 34, deren Radius grösser als die Summe aus Radius der Trommel 27 und Höhe des Fördergurtes ist, letztere gemessen vom eigentlichen Fördergurt 10 senkrecht bis zur Oberkante 13 der Mitnehmerleisten 12. Infolgedessen stehen die Flansche 34 in radialer Richtung über die Mitnehmerleisten 12 und auch die Wellenkanten 11 des die Trommel umlaufenden Fördergurtes etwas über. Den Flanschen 34 kommen zwei Funktionen zu: Sie bewirken eine zusätzliche Führung des Fördergurtes in seitlicher Richtung. Ausserdem wirken sie als Abstandshalter nach unten, wenn sich die Fördergurt-Schleife 21 mit zunehmender Entleerung des Schiffes dessen Boden nähert. Die Flansche beugen so einer Beschädigung des Fördergurtes durch gewaltsames Aufsetzen auf den Schiffsboden vor.

Die Flansche 34 können, was nicht näher gezeigt ist, am Umfang Zähne haben, die zur Auflockerung des aufzunehmenden Schüttgutes 1 beitragen.

Im unbenutzten Zustand der Vorrichtung, wenn das Fördergerüst 3 nicht in ein Schiff 2 abgesenkt ist, hängt die Schleife 21 mit den beiden Fördergurt-Trumen 10' und 10" parallel zueinander frei nach unten. Dann hat sie, gemessen von ihrem tiefsten Punkt bis zu den Führungsrollen 25, 26, eine Höhe, die etwa dem Neunfachen der Höhe der Mitnehmerleisten 12 entspricht.

Zum Entladen von Schüttgut 1 aus einem Schiff 2 wird das Fördergerüst 3 bei laufendem Fördergurt 10 allmählich in das Schiff abgesenkt, bis der Fördergurt 10 am unteren Ende der Schleife 21 in das Schüttgut 1 einzutauchen beginnt. Die Absenkung wird soweit fortgesetzt, dass sich die Schleife 21 unter dem Gegendruck des Schüttgutes verformt und die in der Figur dargestellte Gestalt annimmt, bei der sie in vertikaler Richtung verkürzt und dafür im Bereich der Schleife zulaufenden Fördergurt-Rücktrumes 10" in horizontaler Richtung vergrössert ist. Hierbei bildet sich am unteren Ende der Schleife ein Abschnitt 10"' aus, in welchem der Fördergurt in etwa geradlinig verläuft.

Die Radien der zunächst konkaven und dann konvexen Ablenkung des Rücktrumes 10" vor dem geradlinigen Abschnitt 10"' stellen sich selbsttätig aufgrund der Eigensteifigkeit des Fördergurtes 10 und der aufgesetzten Wellenkanten 11 ein. Am Übergang des geradlinigen Abschnittes 10"' zum nach oben laufenden Fördertrum 10' befindet sich die Begrenzungs-Trommel 27. In dem geradlinigen, in Laufrichtung des Fördergurtes leicht nach unten geneigten Abschnitt 10"' gräbt sich der Fördergurt 10 mit Hilfe seiner Mitnehmerleisten 12 zunehmend tiefer in das Schüttgut 1 ein, bis die Förderkästen 14 vollständig mit Schüttgut gefüllt sind und im gefüllten Zustand am Fördertrum 10' nach oben laufen. Die Begrenzungs-Trommel 27 verhindert eine Verlagerung der Schleife 21 entgegen der Laufrichtung 6 des Fördergurtes im geradlinigen Abschnitt 10"', die sonst als Reaktion auf den Schöpfvorgang eintreten würde. Die Begrenzungs-Trommel 27 gibt der Schleife 21 jedoch keine starre Form vor, sondern kann sich aufgrund ihrer Lagerung an dem verschieblichen Bügel 28 den beim Aufnehmen des Schüttgutes zwangsläufig eintretenden Formänderungen der Schleife ungehindert anpassen. In dem Masse, wie das Schiff 2 durch die Tätigkeit des Fördergurtes von Schüttgut entleert wird, wird das Fördergerüst 3 allmählich weiter abgesenkt, so dass die geschilderte Betriebs-Form der Schleife 21 immer in etwa erhalten bleibt.

Im Bereich der oberen End-Umlenkung des Fördergurtes 10 an der Antriebstrommel 20 ist eine in der Figur nur angedeutete Abdeckung 8 vorgesehen, mit der ein seitlicher Trichter 9 in Verbindung steht, durch welchen das nach oben transportierte Schüttgut vom Fördergurt 10 auf einen nur angedeuteten, zum Land weiterführenden Gurtförderer 40 übergeben wird.

Figur 3 zeigt eine Abwandlung der vorbeschriebenen Vorrichtung, die in ihrem oberen, nicht dargestellten Teil sowie mit denjenigen Teilen, welche die gleiche Bezugszahl wie in den Figuren 1 und 2 tragen, identisch übereinstimmt. Die Abwandlung besteht in einer unterschiedlichen Ausbildung und Führung der Begrenzungs-Trommel innerhalb der Schleife 21.

Bei der Abwandlung ist eine Begrenzungs-Trommel 127 ohne seitliche Flansche vorgesehen. Dadurch wird es möglich, den Fördergurt in Berührung mit dem Schiffsboden zu bringen und so, wenn man ausserdem einen Fördergurt ohne Zinken an den Mitnehmerleisten 12 verwendet, eine ganz vollständige, saubere Entleerung des Schiffes zu erreichen.

Weiterhin ist bei der Abwandlung die Begrenzungstrommel 127 an einem Bügel 128 gelagert, der mit seinen beiden Schenkelarmen 129 am Fördergerüst 3 um eine horizontale Achse 135 schwenkbar angelenkt ist. Die zu den Fördergurt-Trumen parallele Schwenkachse 135 ist am Ende eines kurzen Auslegers 7 vorgesehen, der am unteren Ende des Fördergerüstes 3 seitlich, in Verlängerung der unteren Streben 32 von diesem wegsteht. An dem Bügel 128 ist die Begrenzungs-Trommel 127 in vertikaler Richtung begrenzt verlagerbar, wobei gleichzeitig eine gewisse Verlagerung auch in horizontaler Richtung stattfindet. Die Auslegung ist so getroffen, dass die Begrenzungs-Trommel 127 in der dargestellten Betriebssituation, bei der sich die Schenkelarme 129 unter einem Winkel von 30 bis 45° nach unten erstrecken, eine seitliche Lage derart hat, dass das Fördertrum 10' von der Begrenzungs-Trommel 27 geradlinig nach oben läuft.

Im übrigen ist die Wirkungsweise die gleiche wie beim vorherigen Ausführungsbeispiel.

**Patentansprüche**

1. Verfahren zum Entladen von Schüttgut (1) aus einem grossen Behälter (2), insbesondere aus einem Schiff, mittels eines endlos umlaufenden mit quer ausgerichteten, in Laufrichtung (6) abgewinkelten Mitnehmerleisten (12) besetzten Fördergurtes (10) aus Gummi oder dergl., der von oben in den Behälter hinein geführt wird, im Behälter eine seiner beiden End-Umlenkungen erfährt und nach Beladung mit Schüttgut im Bereich der End-Umlenkung nach oben aus dem Behälter hinausläuft, wobei der Fördergurt in dem Masse, wie der Behälter von Schüttgut entleert wird, tiefer in den Behälter abgesenkt wird, dadurch gekennzeichnet, dass man den Fördergurt (10) im Bereich der behälterseitigen End-Umlenkung in einer lediglich unter dem Einfluss des Eigengewichtes des Fördergurtes ohne Anwendung äusserer Spannmittel gebildeten Schleife (21) frei laufen lässt und jeweils bis zum Eintauchen in das Schüttgut (1) soweit in den Behälter (2) absenkt, dass die Schleife (21) gegenüber der Form, die sie freihängend ohne Berührung mit Schüttgut (1) annimmt, in vertikaler Richtung verkürzt und dafür im Bereich des zulaufenden Fördergurt-Rücktrumes (10") in horizontaler Richtung vergrössert ist, wobei der Fördergurt (10) das Schüttgut (1) am unteren Ende (10''') der Schleife selbstschöpfend aufnimmt, und dass man die sich als Reaktion auf den Schöpfvorgang ergebende Verlagerung der Schleife (21) entgegen der Fördergurt-Laufrichtung (6) durch eine im Inneren der Schleife am Übergang zum nach oben ablaufenden Fördertrum (10') vorgesehene freilaufende Trommel (27) begrenzt, die in vertikaler Richtung begrenzt verlagerbar ist und mit ihrem Gewicht an der Laufseite des Fördergurtes (10) anliegt.

2. Vorrichtung zum Entladen von Schüttgut (1) aus einem grossen Behälter (2), insbesondere aus einem Schiff, mit einem von oben in den Behälter absenkbaren Fördergerüst (3), an dessem unteren Ende das Schüttgut aufgenommen wird, mit einem an oder in dem Fördergerüst (3) mit seinem Rücktrum (10") nach unten und mit seinem Fördertrum (10') nach oben laufenden, endlosen Fördergurt (10) aus Gummi oder dergleichen, der auf der Tragseite mit quer ausgerichteten, in Fördergurt-Längsrichtung voneinander beabstandeten Mitnehmerleisten (12) aus Gummi oder dergl. besetzt ist, die einen in Laufrichtung (6) des Fördergurtes abgewinkelten, schaufelförmigen Querschnitt haben, und mit einer am oberen Ende oder oberhalb des Fördergerüstes (3) vorgesehenen Antriebstrommel (20) für den Fördergurt, dadurch gekennzeichnet, dass der Fördergurt (10) unterhalb des Fördergerüstes (3) in einer lediglich unter dem Einfluss des Eigengewichtes des Fördergurtes, ohne Anwendung äusserer Spannmittel gebildeten Schleife (21) frei läuft, dass innerhalb der Schleife (21) am Übergang zum nach oben ablaufenden Fördertrum (10') eine freilaufende Trommel (27; 127) vorgesehen ist, die in vertikaler Richtung begrenzt verlagerbar ist, und dass das Fördergerüst (3) jeweils so weit in den Behälter (2) abgesenkt wird, dass der Fördergurt (10) am unteren Ende (10''') der Schleife (21) in das Schüttgut (1) eintaucht und dieses selbstschöpfend aufnimmt, wobei die Schleife (21) gegenüber der Form, die sie freihängend, ohne Berührung mit Schüttgut (1) annimmt, in vertikaler Richtung verkürzt und dafür im Bereich des zulaufenden Fördergurt-Rücktrumes (10") in horizontaler Richtung vergrössert ist und die freilaufende Trommel (27; 127) mit ihrem Gewicht an der Laufseite des Fördergurtes (10) anliegt.

3. Vorrichtung nach Anspruch 2, dadurch gekennzeichnet, dass der Fördergurt (10) beiderseits der quer ausgerichteten Mitnehmerleisten (12) mit zwei seitlichen, durchgehenden gewellten Randleisten (Wellenkanten) (11) besetzt ist.

4. Vorrichtung nach Anspruch 3, dadurch gekennzeichnet, dass die Mitnehmerleisten (12) höher als die Wellenkanten (11) sind.

5. Vorrichtung nach Anspruch 2, 3 oder 4, dadurch gekennzeichnet, dass am unteren Ende des Fördergerüstes (3) Führungsmittel (22, 25, 26) für die beiden Trume (10', 10") des Fördergurtes (10) vorgesehen sind, welche die Trume jeweils in einer bestimmten Ebene und/oder in einer bestimmten seitlichen Ausrichtung halten, wobei sich die Schleife (21) zwischen den Führungsmitteln (22, 25, 26) erstreckt.

6. Vorrichtung nach einem der Ansprüche 2 bis 5, dadurch gekennzeichnet, dass die Schleife (21) im freihängenden Zustand, gemessen von ihrem tiefsten Punkt bis zum unteren Ende des Fördergerüstes (3) eine Höhe hat, die dem Sechs- bis Zwölffachen, vorzugsweise dem Acht- bis Zehnfachen der Höhe der Mitnehmerleisten (12) entspricht.

7. Vorrichtung nach einem der Ansprüche 2 bis 6, dadurch gekennzeichnet, dass die Trommel (27) am unteren Ende eines Bügels (28) gelagert ist, der in einer Führung (30) am Fördergerüst (3) in Richtung der beiden Fördergurt-Trume (10'; 10") verschieblich gehalten ist.

8. Vorrichtung nach einem der Ansprüche 2 bis 7, dadurch gekennzeichnet, dass die Mitnehmerleisten (12) eine spitz zulaufende Oberkante (15) haben.

9. Vorrichtung nach einem der Ansprüche 2 bis 8, dadurch gekennzeichnet, dass mindestens einige der Mitnehmerleisten (12) des Fördergurtes (10) an ihrer Oberkante (15) mit vom Fördergurt wegstehenden Zinken (16) zur Auflockerung des Schüttgutes (1) versehen sind.

10. Vorrichtung nach einem der Ansprüche 2 bis 9, dadurch gekennzeichnet, dass die Trommel (27) mit zwei seitlichen Flanschen (34) versehen ist, deren Radius grösser als die Summe aus Radius der Trommel (27) und Höhe des Fördergurtes (10), gemessen bis zur Oberkante (13) der Mitnehmerleisten (12), ist.

## Revendications

1. Procédé de déchargement de matériaux en vrac d'un réservoir (2) de grandes dimensions, plus particulièrement d'un navire, à l'aide d'une bande transporteuse (10) en caoutchouc ou en un matériau similaire, circulant comme bande sans fin et équipée de barrettes transversales (12) formant auges, en forme de croissant ouverte dans la direction de marche (6), ladite bande entrant dans le réservoir en venant d'en haut, étant soumise dans le réservoir à l'un de ses renvois terminaux, et sortant du réservoir en allant vers le haut après chargement avec des matériaux en vrac dans la région du renvoi terminal, la bande transporteuse étant plongée davantage dans le réservoir dans la mesure où ce dernier est déchargé des matériaux en vrac, caractérisé en ce que dans la région du renvoi terminal, côté réservoir, l'on permet à la bande transporteuse (10) de circuler librement le long d'un lacet (21) formé purement sous l'influence du poids propre de la bande transporteuse, sans application de moyens externes de mise en tension, et que, chaque fois, on la fait descendre dans le réservoir (2) jusqu'à ce qu'elle se plonge dans les matériaux en vrac (1) à tel degré que le lacet (21), lorsqu'on le compare avec la forme qu'il prend quand il est suspendu librement, sans contact avec des matériaux en vrac (1), a une longueur réduite en direction verticale et, en revanche, une longueur augmentée dans le sens horizontal, dans la région du brin de retour (10'') arrivant de la bande transporteuse (10), cette dernière reprenant les matériaux en vrac (1) à l'extrémité inférieure (10''') du lacet (21) grâce à une action de puisage automatique, et en ce qu'on limite le déplacement du lacet (21) qui se produit comme réaction au processus de puisage dans la direction opposée à la direction de marche (6) de la bande transporteuse, à l'aide d'un tambour libre (27) disposé à l'intérieur du lacet au droit de la transition au brin porteur (10') de départ vers le haut, ce tambour pouvant être déplacé verticalement dans une plage limitée et prenant appui, de tout son poids, contre le côté tambour de la bande transporteuse (10).

2. Installation de déchargement de matériaux en vrac (1) d'un réservoir (1) de grandes dimensions, plus particulièrement d'un navire, ladite installation comportant un châssis de convoyeur (3) capable d'être descendu d'en haut dans le réservoir, et à l'extrémité inférieur duquel les matériaux en vrac sont repris, ledit châssis comprenant une bande transporteuse sans fin (10) en caoutchouc ou en un matériau similaire, guidé sur ou dans le châssis de convoyeur (3) avec son brin de retour (10'') circulant dans le sens d'en haut en bas et avec son brin porteur (10' ) passant d'en bas vers le haut, ladite bande transporteuse étant équipée, sur son côté porteur, de barrettes transversales (12) en caoutchouc ou en un matériau similaire, espacées les unes des autres dans la direction longitudinale de la bande transporteuse, et présentant, en coupe droite transversale, une forme de pelle, coudée dans la direction de marche (6) de la bande transporteuse, et un tambour d'entraînement (20) de la bande transporteuse, disposé à l'extrémité supérieure du châssis de convoyeur (3) ou au-dessus de ce dernier, caractérisée en ce que en-dessous du châssis de convoyeur (3), la bande transporteuse (10) circule librement le long d'un lacet (21) qui se forme purement sous l'influence du poids propre de la bande transporteuse, sans application d'un moyen externe de mise en tension; en ce que l'on a prévu, à l'intérieur du lacet (21), au droit de la transition au brin porteur (10') de départ vers le haut, un tambour libre (27; 127) qui est déplaceable en direction verticale dans une plage limitée; et en ce que, chaque fois, on fait descendre le châssis de convoyeur (83) dans le réservoir (2) à tel degré que la bande transporteuse (10), à l'extrémité inférieure (10''') du lacet (21), se plonge dans les matériaux en vrac (1) et les reprend grâce à une action de puisage automatique, ledit lacet (21), lorsqu'on le compare avec la forme qu'il prend quand il est suspendu librement, sans contact avec des matériaux en vrac (1), a une longueur réduite en direction verticale et en revanche, dans la région du brin de retour (10'') arrivant, une longueur augmentée en direction horizontale, et le tambour libre (27; 127) prenant appui, de tout son poids, contre le côté tambour de la bande transporteuse (10).

3. L'installation selon la revendication 2, caractérisée en ce que la bande transporteuse (10) est équipée, des deux côtés des barrettes transversales (12), de deux bandeaux latéraux continus ondulés (bords ondulés) (11).

4. L'installation selon la revendication 3, caractérisée en ce que les barrettes (12) ont une hauteur plus importante que celle des bords ondulés (11).

5. L'installation selon la revendication 2, 3 ou 4, caractérisée en ce que à l'extrémité inférieure du châssis de convoyeur (3), l'on a prévu des moyens de guidage (22, 25, 26) pour les deux brins (10', 10'') de la bande transporteuse (10), lesdits moyens retenant les brins chacun dans un plan déterminé et/ou dans une orientation latérale déterminée, le lacet (21) s'étendant entre les moyens de guidage (22, 25, 26).

6. L'installation selon l'une quelconque des revendications 2 à 5, caractérisée en ce que le lacet (21), quand il est suspendu librement, a une hauteur, mesurée entre son point le plus bas et l'extrémité inférieure du châssis de convoyeur (3), comprise entre six fois à douze fois, de préférence entre huit fois à dix fois la hauteur des barrettes (12).

7. L'installation selon l'une quelconque des revendications 2 à 6, caractérisée en ce que le tambour (27) est monté sur la partie inférieure d'un arceau (28) qui est supporté, à glissement en direction vers les deux brins (10', 10'') de la bande transporteuse, dans un guidage (30) sur le châssis de convoyeur (3).

8. L'installation selon l'une quelconque des revendications 2 à 7, caractérisée en ce que les barrettes (12) sont munies d'un bord supérieur (15) pointu.

9. L'installation selon l'une quelconque des revendications 2 à 8, caractérisée en ce que au moins, quelques-unes des barrettes (12) de la bande transporteuse (10) sont munies à leur bord supérieur (15) de fourchons (16) qui font saillies par rapport à la bande transporteuse et sont destinés au foisonnement des matériaux en vrac (1).

10. L'installation selon l'une quelconque des revendications 2 à 9, caractérisée en ce que le tambour (27) est muni de deux flasques latéraux (34) dont le rayon est supérieur à la somme du rayon du tambour (27) plus la hauteur de la bande transporteuse (10), telle que mesurée jusqu'au bord supérieur (13) des barrettes (12).

**Claims**

1. A method of unloading bulk material (1) out of a large container (2), in particular out of a ship, by means of an endlessly circulating conveyor belt (10) of rubber or the like which is provided with transversely aligned cleats (12), angled over to point in the direction of travel (6), and is guided to enter the container from above, is subjected, within the container, to one of its terminal deflections, and is run upwards out of the container after having been charged with bulk material in the region of the terminal deflection, said conveyor belt being lowered deeper into the container as the container is being emptied of bulk material, characterized in that in the region of the container-side terminal deflection, the conveyor belt (10) is allowed to run freely along a loop (21) formed merely under the influence of the intrinsic weight of the conveyor belt, without the application of external tensioning means, and in each case is lowered into the container (2) to dip into the bulk material (1) to such an extent that, when compared to the shape it assumes when it is freely suspended without contact with bulk material (1), the loop (21) is shortened in the vertical direction while being extended in the horizontal direction in the region of the incoming return end (10″) of the conveyor belt, the conveyor belt (10) taking up the bulk material (1) at the lower extreme (10‴) of the loop by a self-scooping action, and in that the displacement of the loop (21), which results as a reaction to the scooping action in the opposite sense to the direction of travel (6) of the conveyor belt, is limited by an idle drum (27) provided inside of the loop at the transition to the upwardly outgoing conveying end (10′), said drum being displaceable within a limited range in a vertical direction and bearing with its weight against the drumside of the conveyor belt (10).

2. A device for unloading bulk material (1) out of a large container (2), in particular out of a ship, comprising a conveyor framework (3) capable of being lowered into the container from above and at the lower end portion of which the bulk material is taken up, including an endless conveyor belt (10) of rubber or the like which has its return end (10″) running downward and its conveying end (10′) running upward on or within the conveyor framework (3) and which is fitted on its load-carrying side with transversely aligned cleats (12) of rubber or the like, spaced apart from each other in the longitudinal direction of the conveyor belt and having a scoop-like cross-sectional shape angled over to point in the direction of travel (6) of the conveyor belt, and further comprising a driving drum (20) for the conveyor belt arranged at the upper extreme of, or above, the conveyor framework (3), characterized in that below the conveyor framework (3), the conveyor belt (10) runs freely along a loop (21) formed merely under the influence of the intrinsic weight of the conveyor belt, without the application of external tensioning means, and that inside of the loop (21), at the transition to the upwardly outgoing conveying end (10′), an idle drum (27; 127) is provided which is displaceable within a limited range in a vertical direction, and that the conveyor framework (3) will in each case be lowered into the container (2) to such an extent that the conveyor belt (10) at the lower end portion (10‴) of the loop (21) dips into the bulk material (1) and takes up the same in a self-scooping action, the loop (21), when compared to the shape it assumes when it is freely suspended without contact with bulk material (1), is shortened in the vertical direction, while being extended in the horizontal direction in the region of the incoming return end (10″) of the conveyor belt, and the idle drum (27; 127) bearing with its weight against the drum-side of the conveyor belt (10).

3. The device according to claim 2, characterized in that the conveyor belt (10) is provided at either side of the transversely aligned cleats (12) with two continuous corrugated lateral strips (corrugated sidewalls) (11).

4. The device according to claim 3, characterized in that the cleats (12) are of a greater height than the corrugated sidewalls (11).

5. The device according to claim 2, 3 or 4, characterized in that guiding means (22, 25, 26) are provided at the lower extreme of the conveyor framework (3) for the two ends (10′, 10″) of the conveyor belt (10), said guiding means in each case holding said ends in a particular plane and/or in a particular lateral alignment, the loop (21) extending in-between the guiding means (22, 25, 26).

6. The device according to any of claims 2 to 5, characterized in that in its freely suspended condition, the loop (21) has a height, as measured from its lowest point up to the lower extreme of the conveyor framework (3), which corresponds to six to twelve times, preferably to eight to ten times the height of the cleats (12).

7. The device according to any of claims 2 to 6, characterized in that the drum (27) is mounted on the lower end of a bow (28) which is carried in a guide (30) of the conveyor framework (3) to be slidable in the direction of the two conveyor belt ends (10′, 10″).

8. The device according to any of claims 2 to 7, characterized in that the cleats (12) have a tapering top edge (15).

9. The device according to any of claims 2 to 8, characterized in that at least some of the cleats (12) of the conveyor belt (10) are provided at their top edge (15) with prongs (16) extending away from the conveyor belt and intended to scarify the bulk material (1).

10. The device according to any of claims 2 to 9, characterized in that the drum (27) is provided with to side flanges (34) the radius of which is greater than the sum of the radius of the drum (27) and the height of the conveyor belt (10) as measured up to the top edge (13) of the cleats (12).

FIG. 1

FIG. 2

FIG. 3